# EUROPÄISCHE PATENTSCHRIFT

(11) **EP 3 023 627 B1**
(45) Veröffentlichungstag und Bekanntmachung des Hinweises auf die Patenterteilung: **12.05.2021**
(21) Anmeldenummer: 15190399.4
(22) Anmeldetag: 19.10.2015
(51) Int. Cl.: F02M 57/00, F02M 51/00, G01L 23/10, G01L 9/00

(54) **KRAFTSTOFFINJEKTOR**
FUEL INJECTOR
INJECTEUR DE CARBURANT

(30) Priorität: 21.11.2014 DE 102014223775
(43) Veröffentlichungstag der Anmeldung: 25.05.2016
(73) Patentinhaber: Robert Bosch GmbH, 70442 Stuttgart (DE)
(72) Erfinder: Streicher, Bernd, 70794 Filderstadt (DE); Klumpp, Sebastian, 73779 Deizisau (DE); Leukert, Torsten, 71732 Tamm (DE)

(56) Entgegenhaltungen:
- EP-A1- 2 821 766
- EP-A2- 2 105 602
- DE-A1- 1 648 582
- DE-A1-102012 221 084
- US-A- 4 672 839

## Beschreibung

### Stand der Technik

Die Erfindung betrifft einen Kraftstoffinjektor, insbesondere einen Common-Rail-Injektor. Aus der nachveröffentlichten DE 10 2014 209 330 A1 der Anmelderin ist ein Kraftstoffinjektor bekannt, der im Bereich eines Injektorgehäuses bzw. eines Haltekörpers eine Messeinrichtung aufweist, die dazu dient, die Stellung eines als Düsennadel ausgebildeten Einspritzglieds, insbesondere deren Schließzeitpunkt, zu erfassen. Dadurch soll, insbesondere über die Betriebsdauer des Kraftstoffinjektors betrachtet, aufgrund von Verschleiß oder sonstigen Umständen eine stets optimale Anpassung der Steuerung des Kraftstoffinjektors erzielt werden, damit eine Brennkraftmaschine beispielsweise stets optimale Abgaswerte erreichen kann. Hierzu ist es bei dem bekannten Kraftstoffinjektor vorgesehen, dass ein als Piezoelement ausgebildetes Sensorelement mit der Oberfläche des Injektorgehäuses verklebt ist. Der Ort des Piezoelements befindet sich in unmittelbarer Umgebung einer einen Hochdruckraum des Kraftstoffinjektors mit unter Hochdruck stehendem Kraftstoff versorgenden Versorgungsbohrung, in deren Bereich die Wanddicke des Injektorgehäuses reduziert ist. Dadurch wird ein Verformungsbereich ausgebildet, der sich umso mehr elastisch nach außen wölbt, je größer der Kraftstoffdruck in der Versorgungsbohrung ist. Über das im Bereich des Verformungsbereichs aufgeklebte Piezoelement werden in Abhängigkeit von der Verformung Dehnungen bzw. Zugspannungen erzeugt und über die Klebstoffschicht in das Piezoelement übertragen, was zu einem entsprechenden Spannungssignal des Piezoelements führt, das mittels einer Auswerteschaltung ausgewertet werden kann, um damit auf den Kraftstoffdruck in der Versorgungsbohrung und dadurch auf den Schließ- und Öffnungszeitpunkt der Düsennadel zu schließen. Einzelheiten bezüglich der Ausbildung des Piezoelements, insbesondere hinsichtlich der Anordnung der beiden Elektroden des Piezoelements und deren elektrischer Kontaktierung sind der erwähnten Schrift nicht zu entnehmen.

Aus der DE 10 2012 221 084 A1 ist ein Drucksensor als Teil einer Brennstoffeinspritzanlage bekannt, der piezokeramische Sensorscheiben aufweist. Weiter ist aus EP 2 105 602 A2 ebenfalls ein Kraftstoffdrucksensor bekannt, der zur Messung des Kraftstoffdrucks ebenfalls in einer Kraftstoffeinspritzvorrichtung eingesetzt wird.

### Offenbarung der Erfindung

Ausgehend von dem dargestellten Stand der Technik liegt der Erfindung die Aufgabe zugrunde, einen Kraftstoffinjektor, insbesondere einen Common-Rail-Injektor, derart auszubilden, dass eine größtmögliche Auflösung bzw. ein höchstmögliches Sensorsignal des Piezoelements erzielbar ist, wobei die Baugröße des Piezoelements möglichst gering sein soll. Dadurch soll insbesondere eine relativ geringe Ausnehmung zur Aufnahme des Piezoelements am Kraftstoffinjektor benötigt werden.

Diese Aufgabe wird erfindungsgemäß bei einem Kraftstoffinjektor mit den Merkmalen des Anspruchs 1 im Wesentlichen dadurch gelöst, dass die beiden Elektroden des Piezoelements auf der dem Kraftstoffinjektor abgewandten Seite des Piezoelements in teilweiser Überdeckung zueinander angeordnet sind, wobei im Überdeckungsbereich der beiden Elektroden die beiden Elektroden zumindest bereichsweise, vorzugsweise vollständig elektrisch voneinander isoliert angeordnet sind. Dadurch wird der Vorteil erzielt, dass die maximale Keramik- bzw. Elektrodenfläche zur Erzeugung einer Spannung infolge einer Dehnung in dem Piezoelement zur Verfügung steht. Gleichzeitig ist die Baugröße des Piezoelements hinsichtlich der benötigten Grundfläche insofern minimiert, als dass die dem Kraftstoffinjektor zugewandte Elektrode durch die Überdeckung mit der anderen Elektrode seitlich zumindest im Wesentlichen nicht über die Grundfläche der Keramik des Piezoelements hinausragt. Es ist lediglich erforderlich, die dem Kraftstoffinjektor zugewandte Elektrode mittels eines Zwischen- bzw. Verbindungsabschnitts in Richtung der anderen Elektrode zu verlängern und dort gegen die andere Elektrode umzuformen bzw. umzubiegen, um den Überdeckungsbereich mit der anderen Elektrode auszubilden.

Vorteilhafte Weiterbildungen des erfindungsgemäßen Kraftstoffinjektors sind in den Unteransprüchen angeführt.

Insbesondere kann es vorgesehen sein, dass die beiden Elektroden auf der dem Verformungsbereich abgewandten Seite des Sensorelements zumindest im Wesentlichen parallel zueinander angeordnet sind, und dass der Überdeckungsbereich eine Teilfläche der Fläche der zweiten Elektrode ist.

In konstruktiver Umsetzung des Erfindungsgedankens ist es vorgesehen, dass zwischen den beiden Elektroden im Überdeckungsbereich ein Isolationselement angeordnet ist. Dabei kann es sich bei dem Isolationselement grundsätzlich entweder um ein separates Bauteil bzw. Element handeln, oder aber um ein Element, das integraler Bestandteil einer der beiden Elektroden ist, und beispielsweise durch eine Beschichtung ausgebildet ist.

Um einerseits sicherzustellen, dass im Überdeckungsbereich der beiden Elektroden über den gesamten Überdeckungsbereich gesehen das Isolationselement vorhanden ist sowie, insbesondere beim Ausbilden des Isolationselements in Form einer Beschichtung, eine möglichst einfache Fertigung der Beschichtung zu erzielen, ist es vorgesehen, dass die zweite Elektrode auf der dem Verformungsbereich bzw. injektorseitig abgewandten Seite des Sensorelements zumindest nahezu vollflächig in Wirkverbindung mit dem Isolationselement angeordnet ist. Dadurch wird darüber hinaus gegenüber der Umgebung ein verbesserter Schutz der zweiten Elektrode gegenüber anderen elektrischen Potenzialen erzielt.

Um trotz der die zweite Elektrode nahezu vollflächig überdeckenden Isolation eine relativ einfache elektrische Kontaktierung der zweiten Elektrode zu ermöglichen, ist es bei letztgenannter konstruktiver Ausbildung bevorzugt zusätzlich vorgesehen, dass das Isolationselement in einem außerhalb des Überdeckungsbereichs angeordneten Bereich eine Aussparung zur elektrischen Kontaktierung der zweiten Elektrode aufweist.

Besonders vorteilhaft ist es, wenn das Isolationselement in Form einer Beschichtung ausgebildet ist. Dadurch lässt sich zum einen ein relativ dünnes Isolationselement erzielen, so dass die Bauhöhe des Sensorelements zumindest im Wesentlichen gegenüber dem Stand der Technik nicht erhöht ist, zum zweiten erübrigt sich dadurch während der Montage das Anbringen bzw. Positionieren eines Isolationselements, wenn dieses als separates bzw. loses Teil ausgebildet wäre, und beispielsweise über eine Klebeverbindung mit den Elektroden verbunden werden müsste.

Besonders bevorzugt ist die Anordnung des Verformungsbereichs am Kraftstoffinjektor im Bereich der Versorgungsbohrung oder eines mit der Versorgungsbohrung in Wirkverbindung angeordneten Abzweigs. Dies hat den Vorteil, dass die Verbindungsstelle zwischen dem Verformungsbereich und dem Sensorelement in einem relativ brennraumfernen Bereich angeordnet werden kann. In dem insbesondere während des Betriebs der Brennkraftmaschine geringere Temperaturen herrschen als in einem relativ brennraumnahen Bereich des Injektorgehäuses. Dadurch wird insbesondere auch die Verbindung zwischen den angesprochenen Bauteilen thermisch relativ wenig beansprucht. Bei Verwendung eines Abzweigs wird darüber hinaus der besondere Vorteil erzielt, dass trotz der brennraumfernen Anordnung des Sensorelements dieses an nahezu beliebigem Ort in Umfangsrichtung des Injektorgehäuses angeordnet werden kann.

Bevorzugt ist darüber hinaus eine konstruktive Ausbildung des Verformungsbereichs im Bereich einer sacklochförmigen Vertiefung oder einer Abflachung des Injektorgehäuses. Beide Varianten lassen sich herstellungstechnisch besonders einfach und genau herstellen und ermöglichen darüber hinaus auf relativ einfache Art und Weise die Ausbildung einer ebenen Fläche zur Anbindung des Sensorelements.

Weitere Vorteile, Merkmale und Einzelheiten der Erfindung ergeben sich aus der nachfolgenden Beschreibung bevorzugter Ausführungsbeispiele sowie anhand der Zeichnung.

Diese zeigt in:
- Fig. 1: eine stark vereinfachte, teilweise geschnittene Seitenansicht eines erfindungsgemäßen Kraftstoffinjektors mit einer Messeinrichtung zur zumindest mittelbaren Erfassung des Verlaufs des Kraftstoffdrucks im Kraftstoffinjektor,
- Fig. 2: eine Draufsicht auf ein erstes erfindungsgemäß gestaltetes Sensorelement der Messeinrichtung,
- Fig. 3: ein Schnitt in der Ebene III-III der Fig. 2,
- Fig. 4: ein gegenüber Fig. 2 abgewandeltes Sensorelement mit einer zumindest nahezu vollflächig auf einer zweiten Elektrode angeordneten Isolationsschicht in Draufsicht und
- Fig. 5: einen Schnitt in der Ebene V-V der Fig. 4.

Gleiche Elemente bzw. Elemente mit gleicher Funktion sind in den Figuren mit den gleichen Bezugsziffern versehen.

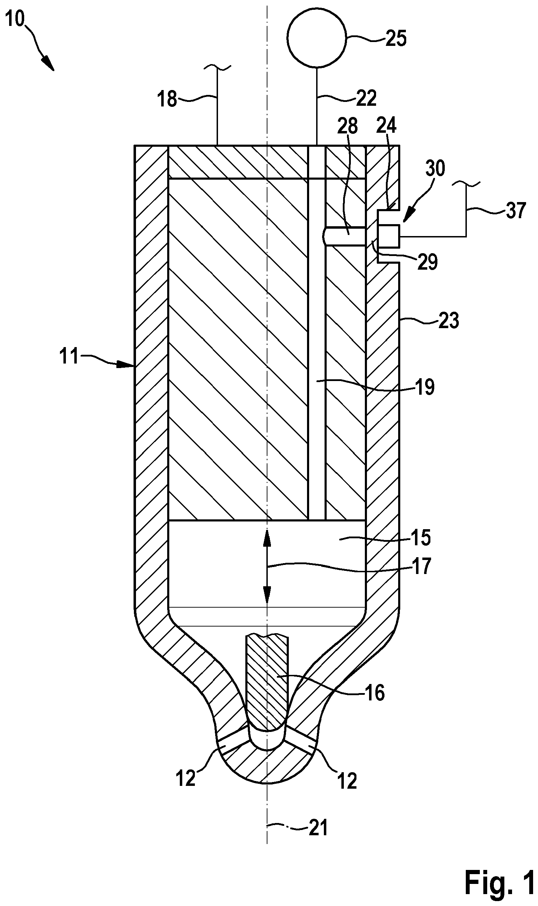

Der in der Fig. 1 stark vereinfacht dargestellte Kraftstoffinjektor 10 ist als sogenannter Common-Rail-Injektor ausgebildet, und dient dem Einspritzen von Kraftstoff in den nicht gezeigten Brennraum einer Brennkraftmaschine, insbesondere einer selbstzündenden Brennkraftmaschine.

Der Kraftstoffinjektor 10 weist ein im Wesentlichen aus Metall bestehendes, ggf. mehrteilig ausgebildetes Injektorgehäuse 11 auf, in dem auf der dem Brennraum der Brennkraftmaschine zugewandten Seite wenigstens eine, vorzugsweise mehrere Einspritzöffnungen 12 zum Einspritzen des Kraftstoffs eingeordnet sind. Innerhalb des Injektorgehäuses 11 bildet dieses einen Hochruckraum 15 aus, in dem eine als Einspritzglied dienende Düsennadel 16 in Richtung des Doppelpfeils 17 hubbeweglich angeordnet ist. In der dargestellten, abgesenkten Stellung der Düsennadel 16 bildet diese zusammen mit der Innenwand des Hochdruckraums 15 bzw. des Injektorgehäuses 11 einen Dichtsitz aus, so dass die Einspritzöffnungen 12 zumindest mittelbar verschlossen sind, derart, dass das Einspritzen von Kraftstoff aus dem Hochdruckraum 15 in den Brennraum der Brennkraftmaschine vermieden wird. In der anderen, nicht dargestellten, von dem Dichtsitz abgehobenen Position der Düsennadel 16 gibt diese die Einspritzöffnungen 12 zum Einspritzen des Kraftstoffs in den Brennraum der Brennkraftmaschine frei. Die Bewegung der Düsennadel 16, insbesondere zum Freigeben der Einspritzöffnungen 12, erfolgt auf eine an sich bekannte Art und Weise mittels eines nicht dargestellten Aktuators, der über eine Spannungsversorgungsleitung 18 von einer Steuereinrichtung der Brennkraftmaschine ansteuerbar ist. Bei dem Aktuator kann es sich insbesondere um einen Magnetaktuator oder aber um einen Piezoaktuator handeln.

Die Versorgung des Hochdruckraums 15 mit unter Hochdruck (Systemdruck) stehendem Kraftstoff erfolgt über eine innerhalb des Injektorgehäuses 11 angeordnete bzw. in Bauteilen des Kraftstoffinjektors 10 ausgebildete Versorgungsbohrung 19, die insbesondere exzentrisch zur Längsachse 21 des Injektorgehäuses 11 in einem Randbereich des Kraftstoffinjektors 10, zumindest im Wesentlichen parallel zur Längsachse 21, verläuft. Die Versorgungsbohrung 19 ist darüber hinaus über einen nicht dargestellten Kraftstoffanschlussstutzen mit einer Kraftstoffleitung 22 verbunden, welche wiederum mit einem Kraftstoffspeicher 25 (Rail) gekoppelt ist.

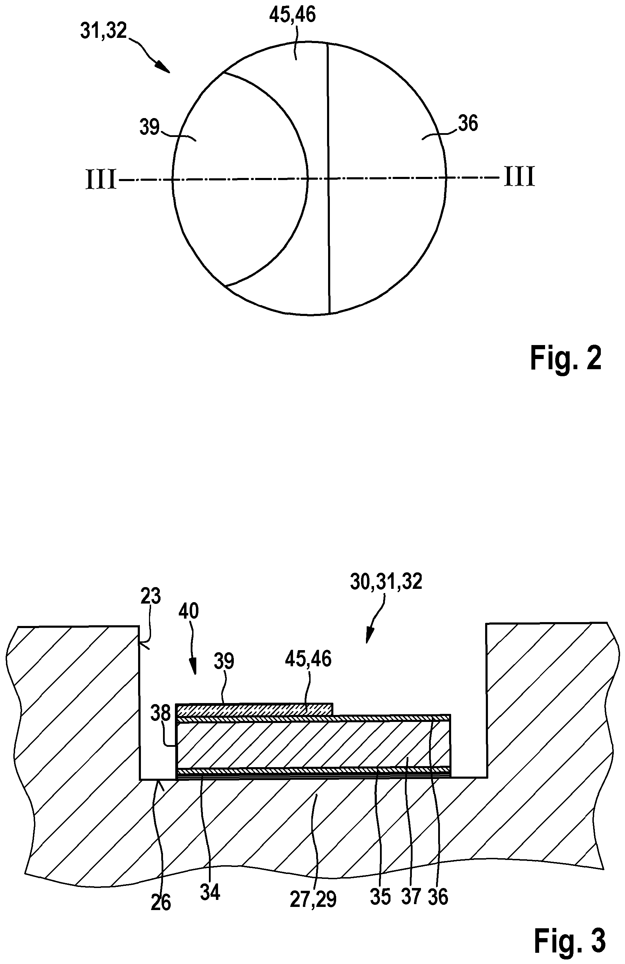

In einem von den Einspritzöffnungen 12 bzw. dem Brennraum axial relativ weit beabstandeten Bereich des Injektorgehäuses 11 ist in dessen Außenwand 23 beispielhaft eine sacklochförmige Vertiefung 24 (Fig. 1 und 3) ausgebildet, so dass die Wanddicke des Injektorgehäuses 11 im Bereich der Vertiefung 24 reduziert ist. Ergänzend wird erwähnt, dass anstelle einer sacklochförmigen Vertiefung 24 das Injektorgehäuse 11 auch eine Abflachung aufweisen kann, in deren Bereich die Wanddicke des Injektorgehäuses 11 reduziert ist.

Der ebene ausgebildete Grund 26 der Vertiefung 24 bildet einen Teil eines Verformungsbereichs 27 aus. Auf der der Vertiefung 24 abgewandten Seite des Injektorgehäuses 11 ist das Injektorgehäuse 11 beispielhaft in Wirkverbindung mit einem Abzweig 28 angeordnet, der wiederum in der Versorgungsbohrung 19 mündet. Dadurch wirkt der in der Versorgungsbohrung 19 augenblicklich herrschende Kraftstoffdruck auch in dem Injektorgehäuse 11 auf der der Vertiefung 24 abgewandten Seite. Dadurch, dass die Wanddicke des Injektorgehäuses 11 im Bereich der Vertiefung 24 reduziert ist, wirkt der Wandabschnitt 29 des Injektorgehäuses 11 auf der der Vertiefung 24 zugewandten Seite als Verformungsbereich 27 in Art einer elastisch verformbaren Membran, wobei die Verformung, welche sich als Wölbung ausbildet, umso größer ist, je höher der augenblickliche Kraftstoffdruck in der Versorgungsbohrung 19 bzw. dem Abzweig 28 ist.

Zur Detektion des zeitlichen Verlaufs des Kraftstoffdrucks in dem Abzweig 28 bzw. in der Versorgungsbohrung 19 und damit auch in dem Hochdruckraum 15, welcher als Indiz für die augenblickliche Stellung der Düsennadel 16 zur Ansteuerung der Düsennadel 16 verwendet wird, weist der Kraftstoffinjektor 10 eine Messeinrichtung 30 auf. Die Messeinrichtung 30 umfasst ein als Piezoelement 31 ausgebildetes Sensorelement 32.

Das Piezoelement 31 ist mit dem Verformungsbereich 27 über eine stoffschlüssige Verbindung in Form einer Klebeverbindung 34 verbunden. Wie insbesondere anhand der Fig. 2 und 3 erkennbar ist, ist der Querschnitt des Piezoelements 31 zumindest im Wesentlichen kreisförmig bzw. rund. Das Piezoelement 31 weist an seinen beiden gegenüberliegenden Stirnflächen jeweils eine Elektrode 35, 36 auf, wobei die dem Verformungsbereich 27 zugewandte Elektrode 35 beispielhaft als Kathode wirkt und über die Klebeverbindung 34 mit dem Verformungsbereich 27 verbunden ist.

Zwischen den beiden Elektroden 35, 36 ist, wie an sich bekannt, eine aus keramischem Material bestehende Scheibe 37 angeordnet. Die beiden Elektroden 35, 36 überdecken jeweils die gesamte Stirnfläche des Piezoelements 31 bzw. der keramischen Scheibe 37. Zusätzlich ist die erste, dem Verformungsbereich 27 zugewandte Elektrode 35 an einer Seite über den Querschnitt der Scheibe 37 an einer Seite verlängert ausgebildet und über einen senkrecht zum Verformungsbereich 27 angeordneten Zwischenabschnitt 38 gegen die Oberseite der zweiten Elektrode 36 mittels eines Kontaktierabschnitts 39 durch einen Verformungsvorgang wie Biegen umgelegt. Zwischen dem Kontaktierabschnitt 39 der Elektrode 35 und der Elektrode 36 ist ein Überdeckungsbereich 40 ausgebildet, der eine Teilfläche der zweiten Elektrode 36 ist, wobei der Kontaktierabschnitt 39 der ersten Elektrode 35 und die zweite Elektrode 36 im Überdeckungsbereich 40 parallel zueinander angeordnet sind.

Erfindungsgemäß ist es vorgesehen, dass im Überdeckungsbereich 40 der beiden Elektroden 35, 36 ein Isolationselement 45 angeordnet ist, das den Überdeckungsbereich 40 zumindest teilweise, vorzugsweise vollständig überdeckt. Bei dem Isolationselement 45, das die beiden Elektroden 35, 36 elektrisch voneinander isoliert bzw. trennt, kann es sich um ein separates Bauteil aus einem elektrisch nicht leitenden Material handeln, oder aber um eine elektrisch nichtleitende Beschichtung, die auf einer der beiden Elektroden 35, 36, zumindest im Überdeckungsbereich 40, aufgebracht ist.

In dem in den Fig. 2 und 3 dargestellten Ausführungsbeispiel ist das Isolationselement 45 in Form einer Beschichtung 46 ausgebildet, und zwar derart, dass die Beschichtung 46 auf der zweiten Elektrode 36 in etwa halbkreisförmig aufgebracht ist. Dadurch ist die Beschichtung 46 nicht nur im Überdeckungsbereich 40 angeordnet, sondern auch noch beidseitig des mit einer Rundung versehenen Kontaktierabschnitts 39 der Elektrode 35. Die elektrische Kontaktierung der beiden Elektroden 35, 36 erfolgt einerseits über den Kontaktierabschnitt 39 der Elektrode 35, und andererseits in dem Bereich der Elektrode 36, in dem keine Beschichtung 46 vorgesehen ist. Die elektrische Kontaktierung kann beispielsweise durch verschweißte, verlötete oder gebondete Drähte erfolgen, oder aber durch Federkontakte. Da dies aus dem Stand der Technik an sich bekannt und nicht erfindungswesentlich ist, ist dies in den Figuren nicht dargestellt.

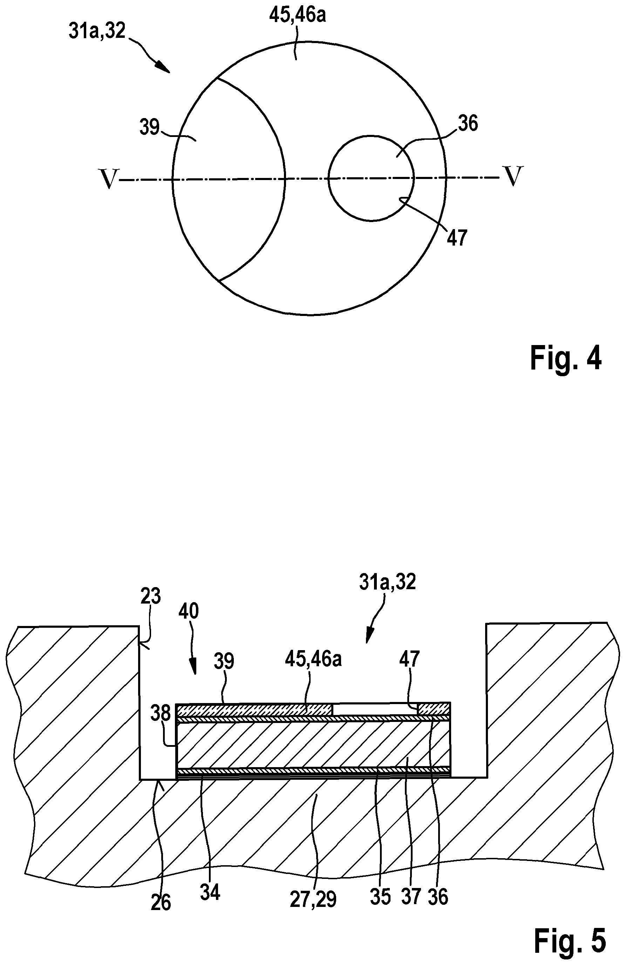

In den Fig. 4 und 5 ist ein gegenüber den Fig. 2 und 3 modifiziertes Piezoelement 31a dargestellt. Das Piezoelement 31a unterscheidet sich von dem Piezoelement 31 dadurch, dass die Beschichtung 46a auf der zweiten Elektrode 36, mit Ausnahme einer beispielhaft runden Aussparung 47 zur elektrischen Kontaktierung der zweiten Elektrode 36, vollflächig aufgebracht ist.

Beim Betrieb des Kraftstoffinjektors 10 verformt sich der Verformungsbereich 27 in Abhängigkeit des in der Versorgungsbohrung 19 herrschenden Kraftstoffdrucks elastisch nach außen. Diese Verformung überträgt sich über die Klebeverbindung 34 auf das Piezoelement 31, 31a und erzeugt dort in Abhängigkeit der Verformung bzw. der Zugspannungen elektrische Spannungen, die mittels einer geeigneten Auswerteschaltung dazu verwendet werden können, zumindest mittelbar auf eine Stellung der Düsennadel 16 in dem Injektorgehäuse 11 zu schließen.

Der soweit beschriebene Kraftstoffinjektor 10 kann vielfältiger Art und Weise abgewandelt bzw. modifiziert werden, ohne vom Erfindungsgedanken abzuweichen, so kann insbesondere die Form oder der Aufbau des Piezoelements 31, 31a von den dargestellten Ausführungsformen abweichen. So ist es beispielsweise denkbar, anstelle einer Klebeverbindung 34 eine anders ausgebildete stoffschlüssige Verbindung auszubilden. Wesentlich ist lediglich, dass in einem Überdeckungsbereich 40 der beiden Elektroden 35, 36 ein Isolationselement 45 angeordnet ist, das dazu dient, dass die gesamte Fläche der beiden Elektroden 35, 36 der Detektion der Verformungen des Verformungsbereichs 27 dienen können. So kann es beispielsweise vorgesehen sein, dass das Isolationselement 45 bzw. die Beschichtung 46, 46a lediglich in einem Teilbereich des Überdeckungsbereichs 40 angeordnet bzw. ausgebildet ist.

## Patentansprüche

1. Kraftstoffinjektor (10), insbesondere Common-Rail-Injektor, mit einem Injektorgehäuse (11), in dem ein Hochdruckraum (15) ausgebildet ist, der über eine im Injektorgehäuse (11) angeordnete Versorgungsbohrung (19) mit unter Druck stehendem Kraftstoff versorgbar ist, und mit einer Messeinrichtung (30) zur zumindest mittelbaren Erfassung des Drucks im Hochdruckraum (15) oder der Versorgungsbohrung (19), wobei die Messeinrichtung (30) dazu ausgebildet ist, eine elastische Verformung eines zumindest mittelbar mit der Versorgungsbohrung (19) oder dem Hochdruckraum (15) in Wirkverbindung angeordneten Verformungsbereichs (27) zu erfassen, wobei die Messeinrichtung (30) ein als Piezoelement (31; 31a) ausgebildetes Sensorelement (32) mit zwei Elektroden (35, 36) aufweist, wobei das Sensorelement (32) zumindest mittelbar mit dem Verformungsbereich (27) verbunden ist, wobei eine erste Elektrode (35) auf der dem Verformungsbereich (27) abgewandten Seite des Sensorelements (32) mit einer zweiten Elektrode (36) einen Überdeckungsbereich (40) ausbildet, und wobei im Überdeckungsbereich (40) der beiden Elektroden (35, 36) diese vollständig elektrisch voneinander isoliert angeordnet sind, **dadurch gekennzeichnet, dass** die erste Elektrode (35) an einer Seite des Piezoelements (31) verlängert ausgebildet und über einen Zwischenabschnitt (38) gegen die Oberseite der zweiten Elektrode (36) durch einen Verformungsvorgang wie Biegen umgelegt ist.

2. Kraftstoffinjektor nach Anspruch 1,
**dadurch gekennzeichnet,**
**dass** die beiden Elektroden (35, 36) auf der dem Verformungsbereich (27) abgewandten Seite des Sensorelements (32) zumindest im Wesentlichen parallel zueinander angeordnet sind, und dass der Überdeckungsbereich (40) eine Teilfläche der Fläche der zweiten Elektrode (36) ist.

3. Kraftstoffinjektor nach Anspruch 1 oder 2,
**dadurch gekennzeichnet,**
**dass** zwischen den beiden Elektroden (35, 36) im Überdeckungsbereich (40) ein Isolationselement (45) angeordnet ist.

4. Kraftstoffinjektor nach Anspruch 3,
**dadurch gekennzeichnet,**
**dass** die zweite Elektrode (36) auf der dem Verformungsbereich (27) abgewandten Seite des Sensorelements (32) zumindest nahezu vollflächig in Wirkverbindung mit dem Isolationselement (45) angeordnet ist.

5. Kraftstoffinjektor nach Anspruch 4,
**dadurch gekennzeichnet,**
**dass** das Isolationselement (45) in einem außerhalb des Überdeckungsbereichs (40) angeordneten Bereich eine Aussparung (47) zur elektrischen Kontaktierung der zweiten Elektrode (36) aufweist.

6. Kraftstoffinjektor nach einem der Ansprüche 3 bis 5,
**dadurch gekennzeichnet,**
**dass** das Isolationselement (45) als Beschichtung (46; 46a) ausgebildet ist.

7. Kraftstoffinjektor nach einem der Ansprüche 1 bis 6,
**dadurch gekennzeichnet,**
**dass** der Verformungsbereich (27) und das Sensorelement (32) im Verbindungsbereich jeweils eben ausgebildet sind.

8. Kraftstoffinjektor nach einem der Ansprüche 1 bis 7,
**dadurch gekennzeichnet,**
**dass** der Verformungsbereich (27) im Bereich der Versorgungsbohrung (19) oder eines mit der Versorgungsbohrung (19) in Wirkverbindung angeordneten Abzweigs (28) angeordnet ist.

9. Kraftstoffinjektor nach einem der Ansprüche 1 bis 8,
**dadurch gekennzeichnet,**
**dass** der Verformungsbereich (27) im Bereich einer sacklochförmigen Vertiefung (24) oder einer Abflachung des Injektorgehäuses (11) angeordnet ist.

10. Kraftstoffinjektor nach einem der Ansprüche 1 bis 9,
**dadurch gekennzeichnet,**
**dass** das Sensorelement (32) und der Verformungsbereich (27) mittels einer Klebeverbindung (34) miteinander verbunden sind.

11. Kraftstoffinjektor nach einem der Ansprüche 1 bis 10,
**dadurch gekennzeichnet,**
**dass** im Injektorgehäuse (11) wenigstens eine Einspritzöffnung (12) zum Einspritzen von Kraftstoff in den Brennraum einer Brennkraftmaschine ausgebildet ist, die zumindest mittelbar mit dem Hochdruckraum (15) verbundenen ist, und mit einem die wenigstens eine Einspritzöffnung (12) freigebenden oder verschließenden Einspritzglied (16).

## Claims

1. Fuel injector (10), in particular common rail injector, having an injector housing (11) in which a high-pressure space (15) is formed, which space can be supplied with pressurized fuel via a drilled supply hole (19) which is arranged in the injector housing (11), and having a measuring device (30) for at least indirectly sensing the pressure in the high-pressure space (15) or the drilled supply hole (19), wherein the measuring device (30) is designed to sense elastic deformation of a deformation area (27) which is arranged at least indirectly operatively connected to the drilled supply hole (19) or the high-pressure space (15), wherein the measuring device (30) has a sensor element (32) which is embodied as a piezo element (31; 31a) and has two electrodes (35, 36), wherein the sensor element (32) is at least indirectly connected to the deformation area (27), wherein a first electrode (35) on the side of the sensor element (32) facing away from the deformation area (27) forms an overlapping area (40) with a second electrode (36), and wherein in the overlapping area (40) of the two electrodes (35, 36) the latter are arranged completely electrically insulated from one another, **characterized in that** the first electrode (35) is formed lengthened on one side of the piezo element (31), and is repositioned over an intermediate section (38) towards the upper side of the second electrode (36) by means of a deformation process such as bending.

2. Fuel injector according to Claim 1,
**characterized**
**in that** the two electrodes (35, 36) are arranged at least essentially parallel to one another on the side of the sensor element (32) facing away from the deformation area (27), and in that the overlapping area (40) is a partial surface area of the surface area of the second electrode (36) .

3. Fuel injector according to Claim 1 or 2,
**characterized**
**in that** an insulating element (45) is arranged in the overlapping area (40) between the two electrodes (35, 36) .

4. Fuel injector according to Claim 3,
**characterized**
**in that** the second electrode (36) is arranged operatively connected, at least virtually over its entire surface area, to the insulating element (45) on the side of the sensor element (32) facing away from the deformation area (27) .

5. Fuel injector according to Claim 4,
**characterized**
**in that** the insulating element (45) has, in an area arranged outside the overlapping area (40), a cutout (47) for the formation of electrical contact with the second electrode (36).

6. Fuel injector according to one of Claims 3 to 5,
**characterized**
**in that** the insulating element (45) is embodied as a coating (46; 46a).

7. Fuel injector according to one of Claims 1 to 6,
**characterized**
**in that** the deformation area (27) and the sensor element (32) are each of planar design in the connecting area.

8. Fuel injector according to one of Claims 1 to 7,
**characterized**
**in that** the deformation area (27) is arranged in the region of the drilled supply hole (19) or of a branch (28) which is arranged operatively connected to the drilled supply hole (19).

9. Fuel injector according to one of Claims 1 to 8,
**characterized**
**in that** the deformation area (27) is arranged in the region of a depression (24) in the form of a blind hole or in the region of a flattened portion of the injector housing (11).

10. Fuel injector according to one of Claims 1 to 9,
**characterized**
**in that** the sensor element (32) and the deformation area (27) are connected to one another by means of a bonded connection (34).

11. Fuel injector according to one of Claims 1 to 10,
**characterized**
**in that** at least one injection opening (12) for injecting fuel into the combustion chamber of an internal combustion engine is formed in the injector housing (11) and is connected at least indirectly to the high-pressure space (15), and having an injection element (16) which clears or closes off the at least one injection opening (12) .

## Revendications

1. Injecteur de carburant (10), en particulier injecteur à rampe commune, comprenant un boîtier d'injecteur (11), dans lequel est ménagé une chambre à haute pression (15) qui peut être alimentée en carburant sous pression par le biais d'un alésage d'alimentation (19) ménagé dans le boîtier d'injecteur (11), et un dispositif de mesure (30) pour détecter au moins indirectement la pression dans la chambre à haute pression (15) ou dans l'alésage d'alimentation (19), le dispositif de mesure (30) étant conçu pour détecter une déformation élastique d'une zone de déformation (27) disposée en liaison fonctionnelle au moins indirecte avec l'alésage d'alimentation (19) ou la chambre à haute pression (15), le dispositif de mesure (30) comportant un élément formant capteur (32) conçu comme un élément piézo (31 ; 31a) et pourvu de deux électrodes (35, 36), l'élément formant capteur (32) étant relié au moins indirectement à la zone de déformation (27), une première électrode (35) formant avec une deuxième électrode (36) une zone de chevauchement (40) du côté de l'élément formant capteur (32) qui est à l'opposé de la zone de déformation (27) et les deux électrodes (35, 36) étant disposées dans leur zone de chevauchement (40) en étant complètement isolées électriquement l'une de l'autre, **caractérisé en ce que** la première électrode (35) a une forme allongée sur un côté de l'élément piézo (31) et est repliée sur une portion intermédiaire (38) contre le côté supérieur de la deuxième électrode (36) par un processus de déformation tel que la flexion.

2. Injecteur de carburant selon la revendication 1,
**caractérisé en ce que**
les deux électrodes (35, 36) sont disposées au moins sensiblement parallèlement l'une à l'autre du côté de l'élément formant capteur (32) qui est à l'opposé de la zone de déformation (27), et **en ce que** la zone de chevauchement (40) est une partie de la surface de la deuxième électrode (36).

3. Injecteur de carburant selon la revendication 1 ou 2,
**caractérisé en ce que**
un élément d'isolation (45) est disposé entre les deux électrodes (35, 36) dans la zone de chevauchement (40).

4. Injecteur de carburant selon la revendication 3,
**caractérisé en ce que**
la deuxième électrode (36) est disposée en liaison fonctionnelle avec l'élément d'isolation (45) au moins presque sur toute la surface du côté de l'élément formant capteur (32) qui est à l'opposé de la zone de déformation (27).

5. Injecteur de carburant selon la revendication 4,
**caractérisé en ce que**
l'élément d'isolation (45) comporte un évidement (47) destiné à établir un contact électrique avec la deuxième électrode (36) dans une zone disposée à l'extérieur de la zone de chevauchement (40).

6. Injecteur de carburant selon l'une des revendications 3 à 5,
**caractérisé en ce que**
l'élément d'isolation (45) est conçu sous la forme d'un revêtement (46 ; 46a).

7. Injecteur de carburant selon l'une des revendications 1 à 6,
**caractérisé en ce que**
la zone de déformation (27) et l'élément formant capteur (32) ont chacun une forme plane dans la zone de liaison.

8. Injecteur de carburant selon l'une des revendications 1 à 7,
**caractérisé en ce que**
la zone de déformation (27) est disposée dans la zone de l'alésage d'alimentation (19) ou d'une branche (28) disposée en liaison fonctionnelle avec l'alésage d'alimentation (19).

9. Injecteur de carburant selon l'une des revendications 1 à 8,
**caractérisé en ce que**
la zone de déformation (27) est disposée dans la zone d'un creux (24) en forme de trou borgne ou d'un aplatissement du boîtier d'injecteur (11).

10. Injecteur de carburant selon l'une des revendications 1 à 9,
**caractérisé en ce que**
l'élément formant capteur (32) et la zone de déformation (27) sont reliés l'un à l'autre au moyen d'une liaison adhésive (34).

11. Injecteur de carburant selon l'une des revendications 1 à 10,
**caractérisé en ce que**
au moins une ouverture d'injection (12) destinée à injecter du carburant dans la chambre de combustion d'un moteur à combustion interne est ménagée dans le boîtier d'injecteur (11) et est reliée au moins indirectement à la chambre à haute pression (15), et comprenant un élément d'injection (16) qui libère ou ferme l'au moins une ouverture d'injection (12).
